# EUROPEAN PATENT SPECIFICATION

(11) **EP 1 706 982 B1**
(45) Date of publication and mention of the grant of the patent: **16.04.2008**
(21) Application number: 05702637.9
(22) Date of filing: 11.01.2005
(51) Int. Cl.: H04L 29/08, H04Q 7/38

(54) **USER LOCATION RETRIEVAL FOR CONSUMER ELECTRONIC DEVICES**
ABRUF DER BENUTZERPOSITION FÜR ELEKTRONISCHE VERBRAUCHERGERÄTE
EXTRACTION DE LOCALISATION D'UTILISATEUR DE DISPOSITIFS ELECTRONIQUES DE CLIENT

(30) Priority: 13.01.2004 US 536190 P
(43) Date of publication of application: 04.10.2006
(73) Proprietor: Koninklijke Philips Electronics N.V., 5621 BA Eindhoven (NL)
(72) Inventor: MUSIAL, Pawel, NL-5621 BA Eindhoven (NL)
(74) Representative: Groenendaal, Antonius W. M.
(86) International application number: PCT/IB2005/050119
(87) International publication number: WO 2005/069579

(56) References cited:
- WO-A-03/047303
- DE-U1- 20 311 007
- US-A1- 2002 111 172

## Description

The present invention relates to providing user data to recommender systems of consumer electronic devices and, more particularly, to providing locations of the user's mobile terminal to such systems.

More and more, consumer electronic (CE) devices are able to adapt to personal needs of the user. Recommender systems, which are integrated into CE devices like a television (TV) or a set-top box, afford an exceptional degree of personalization for the devices. The recommender for such devices works as an electronic guide/butler that helps the user to choose or filter programs or content that he/she may like. An example of a system with a recommender is a personal video recorder (PVR) or digital video recorder (DVR) such as theTiVo box in which the recommender is used to select for recording TV programs the user may like. The effectiveness of the recommender is, however, highly dependent on inputregarding what the user likes or dislikes, e. g., user preferences that may vary with time of day or day of the week. Feeding the recommender system with user data or "user profile data" is a crucial factor in making the system work properly. There exists a need to find and get reliable data that can make the system function more efficiently and can provide the user with a selection of content that the user perceives as valuable (e. g. enjoyable) at a given time.

Document DE 203 11 007 U1 describes a communication system including a cellular mobile phone system and WLAN areas. The location of a mobile terminal is determined, and reported to the system. Subsequently the system may propose to the user of the mobile to hand over a data communication link from the mobile phone system to a WLAN area, if the location of the mobile terminal corresponds with an available WLAN area.

Document US 2002/0111172 describes a system for profiling a subscriber based on location. A subscriber's daily activities and locations traveled while partaking in the activities are observed and a psychodemographic profile is developed from the subscriber's pattern of activities. The pattern of activities is associated with a time and a frequency component that is then used to predict a subscriber's activity. The location of the user is detected based on the location of a wireless device. The user profile reflects the pattern of movements of the user. Also the time associated with the location may be stored. A profiler subsequently extracts data from the subscriber location database and generates predicted activities and routes.

The present invention has been made to address the above-noted shortcomings in the prior art. It is an object of the invention to furnish to a recommender of a consumer electronic (CE) device information about the past location of a mobile terminal of the user.

According to the present invention, there is provided a method for providing user data to a recommender system as defined in claim 1, and a mobile terminal for providing user data to a recommender system as defined in claim 10.

The recommender may then propose content related to the past location. The present invention is based on the observation that the user's mobile terminal, such as a mobile phone, hand-held global positioning system (GPS) receiver, personal digital assistant (PDA), has evolved into a strictly personal device that the user almost always carries with him and that the mobile phone, for example, is able to retrieve location information on different gradation levels. Broadcasted control information in a mobile terminal network such as a mobile phone network includes data that identifies the country and the base station or base transceiver station (BTS) making the broadcast. It can thus be determined, for example, from the data that the mobile phone was in Spain and within the broadcast coverage area of a BTS in Barcelona. The invention is also based on the observation that the mobile phone can retrieve this information automatically, and can convey it automatically to the recommender by means of the Bluetooth ad hoc network which is being integrated more and more into mobile and home CE devices.

In brief, the present invention provides user data pertaining to a user of a mobile terminal to a recommender system of a consumer electronic device. The terminal, in one aspect of the invention, determines its current location, saves an identifier of the determined location, and informs the recommender system of the determined location.

In another aspect of the invention, the terminal includes a memory, a transmitter, a receiver configured for receiving a wireless signal, and a processor for determining, from the received signal, a current location of the terminal. The processor also saves an identifier of the determined location to memory and informs the recommender system of the determined location by means of the transmitter.

Details of the invention disclosed herein shall be described with the aid of the figures listed below, wherein the same or similar features are annotated with identical numerals throughout the drawings:
FIG. 1 is a block diagram depicting a mobile phone and a combination CE device/recommender system in accordance with the present invention;
FIG. 2 is a flow chart illustrating the functioning of a preferred embodiment of the present invention; and
FIG. 3 is a flow chart illustrating the functioning of another preferred embodiment of the present invention.

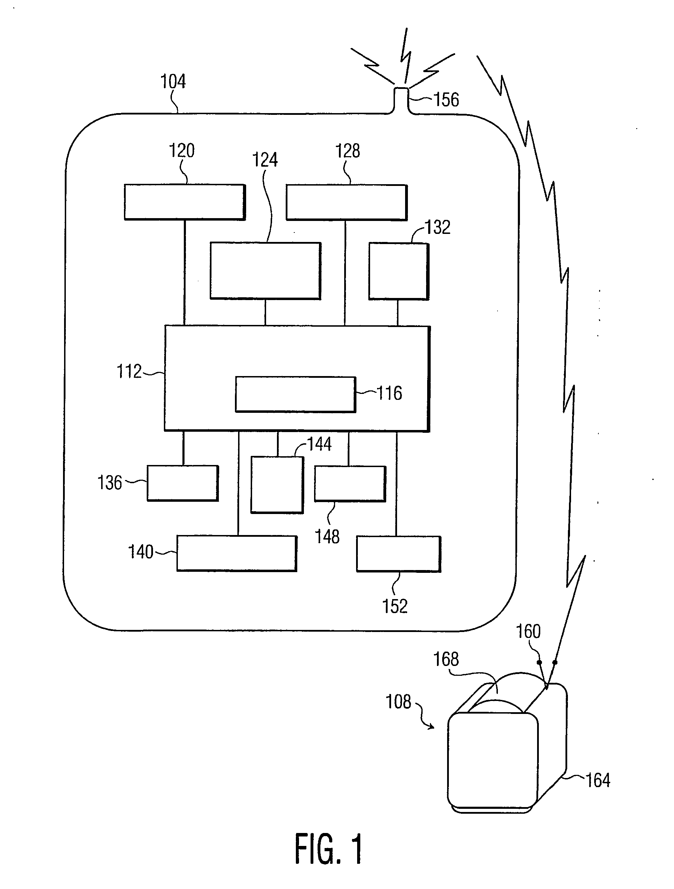

FIG. 1 illustrates, by way of non-limitative example, a mobile phone 104 and a CE/recommender system combination 108 in accordance with the present invention. Although a mobile phone is depicted, any type mobile terminal, e.g. laptop, is envisioned within the intended scope of the present invention. The mobile phone includes a microcontroller 112 having a timer 116. Linked with the microcontroller 112 are a transceiver 120 having a transmitter and a receiver, a Bluetooth device 124, a memory 128, a GPS unit 132, a keypad 136, a microphone 140, a PCS unit 144, a display 148 and a speaker 152. The transceiver 120 communicates wirelessly with a local base transceiver station (BTS) of a mobile phone network (not shown) such as those operating based on code division multiple access (CDMA) or the global system for mobile telecommunications (GSM). The Bluetooth device 124 may include its own transceiver or the transceiver 120 may be adapted to accommodate both Bluetooth frequencies and those of the mobile phone network. Bluetooth is an emerging technology for mobile, wireless communication among two or more devices that incorporate respective Bluetooth devices, the devices being located within a range of about 10 meters. Increasingly, Bluetooth devices are utilized in mobile phones, for example. The memory 128 preferably includes random access memory (RAM) and may include read-only memory (ROM) in any of their various forms. An optional global positioning system (GPS) unit 132 serves as an alternative means by which the phone 104 can determine its location. The personal communication system (PCS) unit 144 incorporates much of the functionality, such as automatic dialing, that is standard for mobile phones. The keypad 136, display 148, microphone 140 and speaker 152 are all suited for performing their conventional functions. As shown in FIG. 1, an antenna 156 of the phone 104 communicates wirelessly, preferably on a Bluetooth connection, with an antenna 160 of a television (TV) 164 component of the CE/recommender system combination 108 which also includes a recommender system or TiVo^{™} 168.

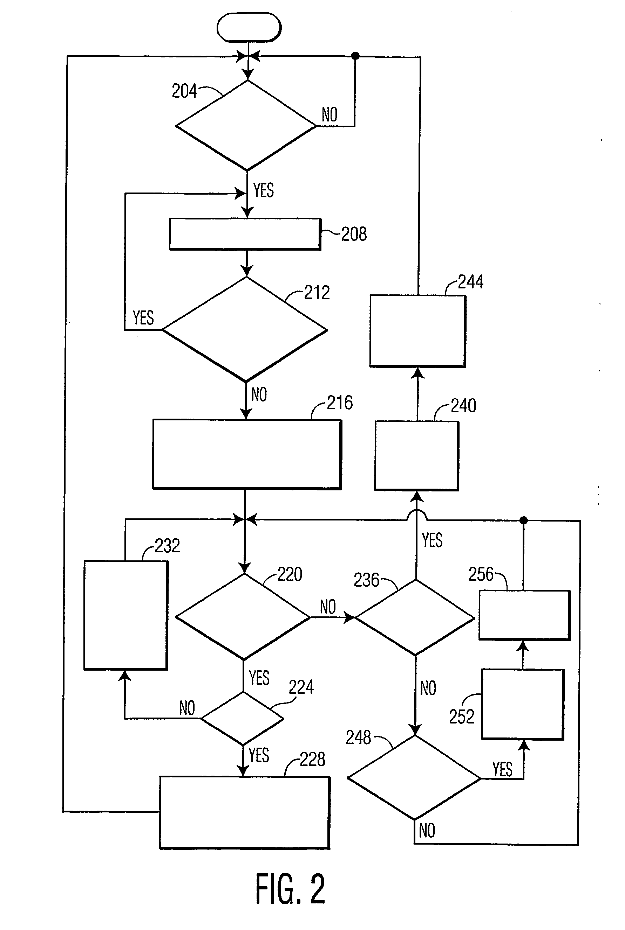

FIG. 2 represents one example of how a mobile phone can derive information about its location that can serve as user data for a recommender system in accordance with the present invention. The process begins once the phone 104 determines that it is outside its home territory which is the home area or portion of the mobile phone network that normally services the subscriber. When the user travels outside the home territory, known as "roaming," the phone 104 may still be serviced by the network, subject to pre-existing agreement among providers, but usually at a higher billing rate. The mobile phone typically can detect when it is roaming by comparing a broadcasted code or series of codes to identifying information stored within the phone. As long as there is a match, the phone is in the home network and is not roaming (step 204). These codes identify a region such as a country, and an included sub-region such as the BTS coverage area in which the phone 104 is currently located. The phone, as will be discussed below, derives these codes from the broadcast and selectively saves them to memory 128, the association of labels such as "Spain" and "Barcelona" with the respective codes being a task preferably left by the recommender 168. However, alternatively, the latter function too can be programmed into the phone 104.

When the codes fail to match, the phone is roaming which may be of interest to the recommender 168, but not necessarily. The user may, for example, have traveled merely to an area neighboring his home area that is not of particular interest to the user. In the present embodiment, the decision on whether the area roamed to is of such a nature, e.g. far enough away or in a desired continent, that it would be of interest to the user is made according to logic within and user data inputted into the recommender 168, although the phone 104 can alternatively be configured to make that decision.

In the current embodiment, a region encountered is ignored if that region has already been saved by the phone 104 for subsequent reporting to the recommender system 168 (steps 208, 212). Alternatively, timing information that relates to the revisiting of a region may be collected for subsequent analysis.

If the current region has not already been saved for subsequent transmission to the recommender 168 (step 212), the length of time for which the phone 104 stays in the current region is determined along with other timing information. More specifically, if the phone 104 stays in the current region or sub-region long enough, the current region or sub-region as appropriate will be retained for reporting to the recommender 168 except that a sub-region is not retained if its respective region is not retained. The latter exception is a preferred, but not a necessary, feature of the invention.

These timings of the current region and sub-region begin by resetting, i.e. starting, the first and second predetermined time periods which respectively correspond to the current region and the current sub-region (step 216). If, for example, the timer 116 is implemented as a real-time clock, resetting a time period amounts merely to noting the current time on the clock and saving that time for subsequent reference. It is within the intended scope of the invention, however, that, alternatively, the timer 116 may include multiple clocks which are dedicated respectively, for example, to specific ones of the current region and what have been regarded at particular times as the current sub-region within that region. If dedicated clocks are used according to this alternative embodiment, resetting a time period may be accomplished by (re)activating the clock.

In addition, the current region and sub-region are stored temporarily while their longevity is being assessed in relation the first and second predetermined time periods respectively. For example, sufficient longevity (i.e., longer than the first predetermined time period) of the user's stay in the current region indicates that the user may find subject matter regarding that region to be of interest, especially in the immediate short term after returning home, where the TV 164 and TiVo^{™} 168 are located.

Query is next made as to whether the first predetermined time period has expired (steps 220, 224). If so, an identifier of the current region is saved for subsequent transmission to the TV 164, as by Bluetooth when the phone 104 comes within the vicinity of the TV. The identifier may simply be the code from the broadcast signal, i.e. country code, or, as suggested above regarding an alternative embodiment, it may be a descriptive label obtained from code translating or interpreting such as "Spain." Also saved, in addition, are any sub-regions which have been flagged, as will be discussed in more detail below (step 228). Processing returns to the beginning (step 204).

If, on the other hand, the expired time period is not the first predetermined time period, it is the second predetermined time period. Since the second predetermined time period pertains to the current sub-region, the current sub-region is flagged (step 232). The current sub-region will therefore be saved along with the current region, provided that the first predetermined time period for the current region expires before a new region is entered by the mobile phone 104.

If, on the other hand, it is determined in step 220 that no time period has expired, query is made as to whether the current region has changed (step 236), based on the decoding of the current broadcast signal, or, alternatively, as detected by means of the GPS unit 132. If the current region has changed, the new region is stored (step 240) and any sub-regions of the former region are unflagged (step 244) so that those sub-regions, like their region, will not be reported to the recommender 168. Processing returns to the beginning (step 204).

If the current region has not changed, but the current sub-region has changed (step 248), the current sub-region is temporarily stored for longevity assessment (step 252) and the second predetermined time period is reset (step 256).

If, on the other hand, the current sub-region has not changed either, processing returns to check again if a time period has expired (step 220).

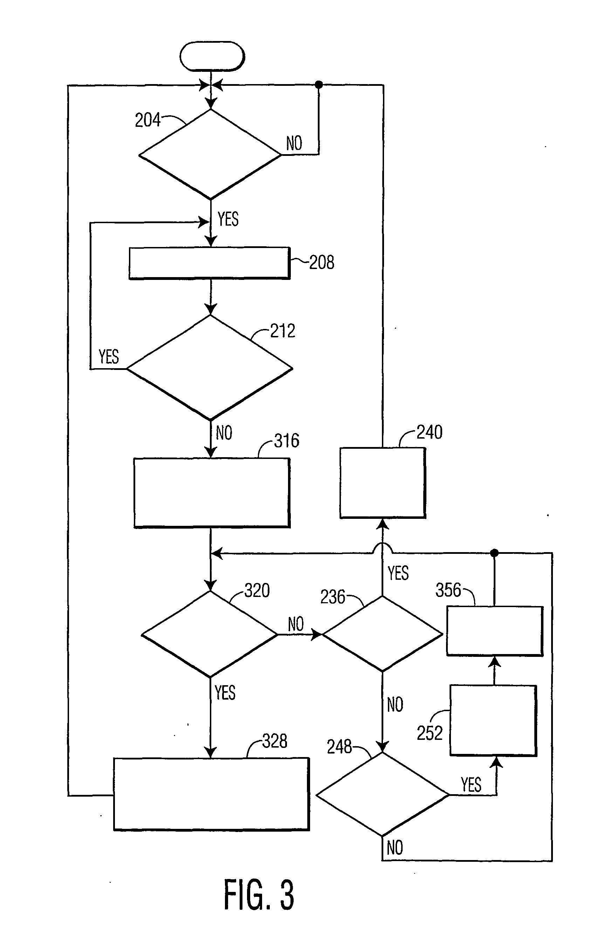

Another preferred embodiment of the present invention, as shown in FIG. 3, differs from the embodiment of FIG. 2 in that the second predetermined time period is not utilized. Instead, sub-regions are timed open-endedly as indicated in step 356. Sub-regions, therefore, need no flagging as an indicator sufficient longevity, as can be seen from step 328. Preferably, the recommender 168 takes care of assessing importance of sub-regions based on their respective timings which are transmitted to the recommender along with the region and sub-region identifiers, as also seen from step 328. Accordingly, only the first predetermined time period, or "region time period," needs to be monitored, as reflected in the respective steps 316, 320.

In the previously depicted two exemplary embodiments, the phone 104 is assumed to denote a location by its current region and current sub-region, although the invention is not limited to two levels of gradation. Multiple levels of gradation are contemplated as within the intended scope of the invention, e. g. continent, country, state/province, city, suburb, street, home. Accordingly, the gradations can be arranged in a telescoping hierarchy of, e. g., a country as a region, a state within the country as a sub-region, a city within the state as, with respect to the latter sub-region, an included sub-region, etc. Labels and, optionally, timing information, may be collected from monitoring that extends to one or more of the multiple sub-regions based on one or more clocks of the timer 116. Interpretation of the collected data may be performed, in whole or in part, by the phone 104 or may be reserved for the recommender system 168.

Once the user returns home, a Bluetooth connection is automatically andseamlessly made as the user, and therefore his phone 104, comes within the Bluetooth effective range of the other Bluetooth device in the TV 164. The information saved for transmission in the above embodiments is then automatically transferred by means of this connection to the TV 164 and then to the recommender system 168. The recommender 168 may surmise from the region identifier "Spain" and from the sub-region identifier "Barcelona" that the returning traveler might, for example, fancy seeing a documentary on Barcelona/Spain. She might smile and say "I've been there."

As has been demonstrated above, a mobile phone is easily adapted to leverage the existing network infrastructure to automatically, and without user intervention other than to take his or her phone along while traveling and returning home, to feed a recommender system with user data that reliably reflects a topic the user would find of value for practical or entertainment reasons.

While there have been shown and described what are considered to be preferred embodiments of the invention, it will, of course, be understood that various modifications and changes in form or detail could readily be made. For example, the keypad 136 can be configured with a "store location" button actuatable by the user to store the current location instead of, or preferably in addition to, an automatically functioning embodiment as described above. It is therefore intended that the invention be not limited to the exact forms described and illustrated, but should be constructed to cover all modifications that may fall within the scope of the appended claims.

## Claims

1. A method for providing user data pertaining to a user of a mobile terminal (104) to a recommender system (168) of a consumer electronic device (164), the method comprising the steps of:
determining, by the terminal, a current location of the terminal (208, 236, 248);
saving, in the terminal, an identifier of the determined location (316, 240, 252); and informing, by means of the terminal, said recommender system of a consumer electronic device of the determined location (124, 156, 160), **characterized in that**
the determining step comprises determining a length of time for which the terminal has stayed in a region, and the recommender system is arranged for proposing content related to said region if the length of time is longer than a predetermined time period.

2. The method of claim 1, wherein said terminal has an input device (136), said determining being triggered by said user actuating said input device.

3. The method of claim 1, wherein the terminal includes a timer (116), said determining step comprises the steps of :
detecting, by said terminal, a signal from a mobile terminal network (132, 156);
recognizing, from the signal, whether said determined location is outside a predefined home territory of the user (204); and
if it is recognized that the terminal is outside the home territory, automatically and without intervention by the user other than moving the terminal to a different location, starting a first predetermined time period as measured by means of said timer (216).

4. The method of claim 3, wherein the current location determined in the determining step changes in correspondence with movement of the terminal, said current location comprising at any moment a region and a sub-region within the region (236, 248), the region and sub-region being discernible by the terminal from the signal, the starting step further comprising the step of monitoring said signal to determine whether at least one of the region and the sub-region stays constant over said first predetermined time period (220).

5. The method of claim 4, wherein the monitoring step comprises the steps of:
monitoring said signal to determine whether the region stays constant over said first predetermined time period (236); and
monitoring said signal to determine whether the sub-region stays constant over a second predetermined time period (248).

6. The method of claim 5, wherein, if it is determined that the region has stayed constant over said first predetermined time period, the saving step further comprises the step of saving the region as an identifier (240) and the informing step comprises the step of informing the recommender system of said region (156, 160).

7. The method of claim 6, wherein, if it is determined that both the region and the sub-region have stayed constant over the first and second predetermined time periods respectively, the saving step further comprises the step of saving the sub-region as an identifier (228) and the informing step comprises the step of informing the recommender system of said sub-region (156, 160).

8. The method of claim 4, wherein the monitoring step comprises the steps of:
monitoring said signal to determine whether the region stays constant over said first predetermined time period (320); and
while the region monitoring determines that the region has stayed constant, monitoring the sub-region to measure for what length of time the sub-region stays constant, to detect any change from said sub-region to a new sub-region (236, 248) and to measure for what length of time the new sub-region stays constant (252, 356).

9. The method of claim 1, wherein the determining, saving and informing steps are initiated automatically by the terminal without intervention by the user other than moving the terminal to a different location (124, 204, 220, 224, 236, 248).

10. System comprising a mobile terminal (104) and a recommender system (168), said mobile terminal adapted to provide user data pertaining to a user of said terminal to said recommender system (168) of a consumer electronic device (164), the mobile terminal comprising:
a memory (128);
a transmitter (120);
a receiver configured for receiving a wireless signal (120, 156) ; and
a processor (112) for determining, from the received signal, a current location of the terminal (204), saving an identifier of the determined location to said memory (216) and informing (124), by means of said transmitter, said recommender system of a consumer electronic device of the determined location,
**characterized in that**
the processor is arranged for determining a length of time for which the terminal has stayed in a region, and the recommender system is arranged for proposing content related to said region if the length of time is longer than a predetermined time period.

11. The system of claim 10, wherein said terminal further comprises an input device (136), and is further configured so that said determining is triggered by said user actuating said input device.

12. The system of claim 10, wherein the mobile terminal further comprising a timer (116), wherein said signal has been transmitted from a mobile terminal network, the processor being further configured for detecting said signal (120, 156), recognizing, from the signal, whether said determined location is outside a predefined home territory of the user and (204), if it is recognized that the terminal is outside the home territory, automatically and without intervention by the user other than moving the terminal to a different location, starting a first predetermined time period (216) as measured by means of said timer.

13. The system of claim 12, wherein the current location to be determined by the processor changes in correspondence with movement of the terminal, said current location comprising at any moment a region and a sub-region within the region (216), the processor being configured for discerning the region and sub-region from the signal and for monitoring said signal to determine whether at least one of the region and the subregion stays constant over said first predetermined time period (236, 248).

14. The system of claim 13, the processor being further configured for:
monitoring said signal to determine whether the region stays constant over a first predetermined time period (236); and
monitoring said signal to determine whether the sub-region stays constant over a second predetermined time period (248).

15. The system of claim 14, the processor being further configured for, if it is determined that the region has stayed constant over said first predetermined time period, saving the region as an identifier (240) and informing the recommender system of said region (124,156,160).

16. The system of claim 15, the processor being further configured for, if it is determined that both the region and the sub-region have stayed constant over the first and second predetermined time periods respectively, saving the sub-region as an identifier (228) and informing the recommender system of said sub-region (124, 156, 160).

17. The system of claim 13, the processor being further configured for monitoring said signal to determine whether the region stays constant over a first predetermined time period (236), and, while determining that the region has stayed constant, monitoring the sub-region to measure for what length of time the sub-region stays constant (248), to detect any change from said sub-region to a new sub-region and to measure for what length of time the new sub-region stays constant (252,356).

18. The system of claim 10, the processor being further configured for initiating said determining, saving and informing automatically without intervention by the user other than moving the terminal to a different location (124, 204, 220, 224, 236, 248).

19. The system of claim 10, wherein said terminal comprises a mobile phone (104).

## Patentansprüche

1. Verfahren zum Zuführen von Benutzerdaten, die zu einem Benutzer eines mobilen Terminals (104) gehören, zu einem Empfehlungssystem (168) eines elektronischen Verbrauchergeräts (164), wobei das Verfahren die nachfolgenden Verfahrensschritte umfasst:
- das Ermitteln, durch das Terminal, einer aktuellen Lage des Terminals (208, 236, 248);
- das Speichern, in dem Terminal, eines Identifizierers der ermittelten Lage (316, 240, 252); und das Informieren des Empfehlungssystems eines elektronischen Verbrauchergeräts über die ermittelte Lage (124, 156, 160), mit Hilfe des Terminals,
**dadurch gekennzeichnet, dass**- der Ermittlungsschritt das Ermitteln einer Zeitlänge umfasst, während der das Terminal sich in einem Gebiet aufgehalten hat, und das Empfehlungssystem dazu vorgesehen ist, Inhalt in Bezug auf das genannte Gebiet vorzuschlagen, wenn die Zeitlänge größer ist als eine vorbestimmte Zeitperiode.

2. Verfahren nach Anspruch 1, wobei das genannte Terminal eine Eingabeanordnung (136) aufweist, wobei das genannte Ermitteln von dem genannten Benutzer durch Betätigung der genannten Eingabeanordnung ausgelöst wird.

3. Verfahren nach Anspruch 1, wobei das Terminal einen Zeitgeber (116) aufweist, wobei der genannte Ermittlungsschritt die nachfolgenden Schritte umfasst:
- das Detektieren, durch das genannte Terminal, eines Signals von einem mobilen Terminalnetzwerk (132, 156);
- das Erkennen, aus dem Signal, ob die genannte ermittelte Lage außerhalb eines vorher definierten alltäglichen Lebensraums des Benutzers (204) ist, und
- wenn erkannt wird, dass das Terminal sich außerhalb des alltäglichen Lebensraums befindet, automatisch und ohne Zwischenkunft durch den Benutzer anders als Verlagerung des Terminals an eine andere Stelle, das Starten einer ersten vorbestimmten Zeitperiode, wie diese mit Hilfe des genannten Zeitgebers (216) gemessen wird.

4. Verfahren nach Anspruch 3, wobei die in dem Ermittlungsschritt ermittelte aktuelle Lage entsprechend der Verlagerung des Terminals sich ändert, wobei die aktuelle Lage zu jeder Zeit ein Gebiet und ein Subgebiet innerhalb des Gebietes (236, 248) aufweist, wobei das Gebiet und das Subgebiet von dem Terminal aus dem Signal erkennbar sind, wobei der Startschritt weiterhin den Schritt der Überwachung des genannten Signals umfasst um zu ermitteln, ob wenigstens das Gebiet oder das Subgebiet eine genannte erste vorbestimmte Zeitperiode (220) konstant bleibt.

5. Verfahren nach Anspruch 4, wobei der Überwachungsschritt die nachfolgenden Schritte umfasst:
- das Überwachen des genannten Signals um zu ermitteln, ob das Gebiet die genannte erste vorbestimmte Zeitperiode (236) konstant bleibt; und
- das Überwachen des genannten Signals um zu ermitteln, ob das Subgebiet eine zweite vorbestimmte Zeitperiode (248) konstant bleibt.

6. Verfahren nach Anspruch 5, wobei, wenn ermittelt wird, dass das Gebiet die genannte erste vorbestimmte Zeitperiode konstant geblieben ist, der Speicherschritt weiterhin den Schritt umfasst, das Gebiet als Identifizierer (240) zu speichern und wobei der Informationsschritt den Schritt umfasst, das Empfehlungssystem des genannten Gebietes (156, 160) zu informieren.

7. Verfahren nach Anspruch 6, wobei, wenn ermittelt worden ist, dass das Gebiet und das Subgebiet die erste bzw. die zweite vorbestimmte Zeitperiode konstant geblieben sind, der Speicherschritt weiterhin den Schritt der Speicherung des Subgebietes als Identifizierer (228) umfasst und der Informationsschritt den Schritt umfasst, dass dem Empfehlungssystem das genannte Subgebiet (156, 160) mitgeteilt wird.

8. Verfahren nach Anspruch 4, wobei der Überwachungsschritt die nachfolgenden Schritte umfasst:
- das Überwachen des genannten Signals um zu ermitteln, ob das Gebiet die genannte erste vorbestimmte Zeitperiode (320) konstant bleibt; und
- während die Gebietsüberwachung bestimmt, dass das Gebiet konstant geblieben ist, das Überwachen des Subgebietes um zu messen, während welcher Zeitlänge das Subgebiet konstant bleibt, um jede Änderung von dem genannten Subgebiet in ein neues Subgebiet (236, 248) zu detektieren und zum messen, während welcher Zeitlänge das neue Subgebiet konstant bleibt (252, 356).

9. Verfahren nach Anspruch 1, wobei der Ermittlungsschritt, der Speicherschritt und der Informationsschritt durch das Terminal automatisch ausgelöst werden, und zwar ohne Zwischenkunft des Benutzers, anders als Verlagerung des Terminals zu einer anderen Stelle (124, 204, 220, 224, 236, 248).

10. System mit einem mobilen Terminal (104) und einem Empfehlungssystem (168), wobei das genannte mobile Terminal dazu vorgesehen ist, Benutzerdaten, die zu einem Benutzer des genannten Terminals gehören, einem Empfehlungssystem (168) eines elektronischen Verbrauchergeräts (164) zuzuführen, wobei das mobile Terminal Folgendes umfasst:
- einen Speicher (128);
- einen Sender (120);
- einen Empfänger, vorgesehen zum Empfangen eines drahtlosen Signals (120, 156); und
- einen Prozessor (112) um aus dem empfangenen Signal eine aktuelle Lage des Terminals (204) zu ermitteln, einen Identifizierer der ermittelten Lage in dem genannten Speicher (216) zu speichern und mit Hilfe des genannten Senders das genannte Empfehlungssystem eines elektronischen Verbrauchergeräts über die ermittelte Lage zu informieren,
**dadurch gekennzeichnet, dass**
- der Prozessor zur Ermittlung einer Zeitlänge vorgesehen ist, während der ein Terminal sich in einem Gebiet befunden hat, und das Empfehlungssystem dazu vorgesehen ist, Inhalt in Bezug auf das genannte Gebiet vorzuschlagen, wenn die Zeitlänge größer ist als eine vorbestimmte Zeitperiode.

11. System nach Anspruch 10, wobei das genannte Terminal weiterhin eine Eingabeanordnung (136) aufweist und weiterhin derart konfiguriert ist, dass die genannte Ermittlung **dadurch** ausgelöst wird, dass der genannte Benutzer die genannte Eingabeanordnung betätigt.

12. System nach Anspruch 10, wobei das mobile Terminal weiterhin einen Zeitgeber (116) aufweist, wobei das genannte Signal von einem mobilen Terminalnetzwerk aus übertragen worden ist, wobei der Prozessor weiterhin konfiguriert ist zum Detektieren des genannten Signals (120, 156), zum aus dem genannten Signal Erkennen, ob die genannte ermittelte Stelle sich außerhalb eines vorher definierten alltäglichen Lebensraums des Benutzers befindet und (204), wenn erkannt wird, dass das Terminal sich außerhalb des alltäglichen Lebensraums befindet, automatisch und ohne Zwischenkunft durch den Benutzer anders als Verlagerung des Terminals an eine andere Stelle, eine erste vorbestimmte Zeitperiode (216) gestartet wird, wie mit Hilfe des genannten Zeitgebers gemessen.

13. System nach Anspruch 12, wobei die von dem Prozessor zu ermittelnde aktuelle Lage entsprechend einer Verlagerung des Terminals sich ändert, wobei die genannte aktuelle Lage zu jedem beliebigen Zeitpunkt ein Gebiet und ein Subgebiet innerhalb des Gebietes (216) aufweist, wobei der Prozessor derart konfiguriert ist, dass er das Gebiet und das Subgebiet aus dem Signal wahrnimmt und das genannte Signal überwacht um zu ermitteln, ob wenigstens das Gebiet oder das Subgebiet während der genannten ersten vorbestimmten Zeitperiode (236, 248) konstant bleibt.

14. System nach Anspruch 13, wobei der Prozessor konfiguriert ist:
- zum Überwachen des genannten Signals um zu ermitteln, ob das Gebiet während einer ersten vorbestimmten Zeitperiode (236) konstant bleibt;
- zum Überwachen des genannten Signals um zu ermitteln, ob das Subgebiet während einer zweiten vorbestimmten Zeitperiode (248) konstant bleibt.

15. System nach Anspruch 14, wobei der Prozessor weiterhin konfiguriert ist um, wenn ermittelt wird, dass das Gebiet während der genannten ersten vorbestimmten Zeitperiode konstant geblieben ist, das Gebiet als einen Identifizierer (240) zu speichern und das Empfehlungssystem über das genannte Gebiet (124, 156, 160) zu informieren.

16. System nach Anspruch 15, wobei der Prozessor weiterhin konfiguriert ist um, wenn ermittelt wird, dass das Gebiet und das Subgebiet während der ersten und der zweiten vorbestimmten Zeitperiode konstant geblieben sind, das Subgebiet als Identifizierer (228) zu speichern und das Empfehlungssystem über das genannte Subgebiet (124, 156, 160) zu informieren.

17. System nach Anspruch 13, wobei der Prozessor weiterhin konfiguriert ist um das genannte Signale zu überwachen, und zwar um zu ermitteln, ob das Gebiet während einer ersten vorbestimmten Zeitperiode (236) konstant bleibt, und während ermittelt wird, dass das Gebiet konstant geblieben ist, das Subgebiet zu überwachen um zu messen, während welcher Zeitlänge das Subgebiet konstant geblieben ist (248), und zwar zum Detektieren einer Änderung aus dem genannten Subgebiet in ein neues Subgebiet und um zu messen, während welcher Zeitlänge das neue Subgebiet konstant bleibt (252, 356).

18. System nach Anspruch 10, wobei der Prozessor weiterhin konfiguriert ist, das genannte Ermitteln, das Speichern und das Informieren automatisch auszulösen, und zwar ohne Zwischenkunft durch den Benutzer anders als Verlagerung des Terminals zu einer anderen Stelle (124, 204, 220, 224, 236, 248).

19. System nach Anspruch 10, wobei das genannte Terminal ein Mobiltelefon (104) enthält.

## Revendications

1. Procédé pour communiquer des données d'utilisateur concernant un utilisateur d'un terminal mobile (104) à un système de recommandeur (168) d'un dispositif électronique de client (164), le procédé comprenant les étapes suivantes:
déterminer, par le terminal, une position actuelle du terminal (208, 236, 248);
sauvegarder, dans le terminal, un identifiant de la position déterminée (316, 240, 252); et communiquer la position déterminée (124, 156, 160) audit système de recommandeur d'un dispositif électronique de client au moyen du terminal,
**caractérisé en ce que**:
l'étape de détermination comprend la détermination d'une période de temps pendant laquelle le terminal est resté dans une région, et le système de recommandeur est conçu pour proposer un contenu associé à ladite région si la période de temps est supérieure à une période de temps prédéterminée.

2. Procédé selon la revendication 1, dans lequel ledit terminal comprend un dispositif d'entrée (136), ladite détermination étant déclenchée par ledit utilisateur qui actionne ledit dispositif d'entrée.

3. Procédé selon la revendication 1, dans lequel le terminal comprend une minuterie (116), ladite étape de détermination comprenant les étapes suivantes:
détecter, par ledit terminal, un signal généré par un réseau de terminal mobile (132, 156);
reconnaître, à partir du signal, si ladite position déterminée est située à l'extérieur d'un territoire domestique prédéfini de l'utilisateur (204); et
s'il est reconnu que le terminal est situé à l'extérieur du territoire domestique, démarrer automatiquement, et sans intervention de l'utilisateur autre que le déplacement du terminal vers une position différente, une première période de temps prédéterminée qui est mesurée au moyen de ladite minuterie (216).

4. Procédé selon la revendication 3, dans lequel la position actuelle déterminée lors de l'étape de détermination change en correspondance avec le déplacement du terminal, ladite position actuelle comprenant à n'importe quel moment une région et une région secondaire à l'intérieur de la région (236, 248), la région et la région secondaire étant discernables par le terminal à partir du signal, l'étape de démarrage comprenant en outre l'étape de surveillance dudit signal afin de déterminer si au moins soit la région soit la région secondaire reste constante sur ladite première période de temps prédéterminée (220).

5. Procédé selon la revendication 4, dans lequel l'étape de surveillance comprend les étapes suivantes:
surveiller ledit signal afin de déterminer si la région reste constante sur ladite première période de temps prédéterminée (236); et
surveiller ledit signal afin de déterminer si la région secondaire reste constante sur une deuxième période de temps prédéterminée (248).

6. Procédé selon la revendication 5, dans lequel, s'il est déterminé que la région est restée constante sur ladite première période de temps prédéterminée, l'étape de sauvegarde comprend en outre l'étape de sauvegarde de la région comme un identifiant (240), et l'étape de communication comprend l'étape consistant à communiquer ladite région (156, 160) au système de recommandeur.

7. Procédé selon la revendication 6, dans lequel, s'il est déterminé que la région et la région secondaire sont toutes les deux restées constantes sur les première et deuxième périodes de temps prédéterminées, respectivement, l'étape de sauvegarde comprend en outre l'étape de sauvegarde de la région secondaire comme un identifiant (228), et l'étape de communication comprend l'étape consistant à communiquer ladite région secondaire (156, 160) au système de recommandeur.

8. Procédé selon la revendication 4, dans lequel l'étape de surveillance comprend les étapes suivantes:
surveiller ledit signal afin de déterminer si la région reste constante sur ladite première période de temps prédéterminée (320); et
pendant que la surveillance de la région détermine que la région est restée constante, surveiller la région secondaire pour mesurer la période de temps pendant laquelle la région secondaire reste constante, détecter tout changement entre ladite région secondaire et une nouvelle région secondaire (236, 248) et mesurer la période de temps pendant laquelle la nouvelle région secondaire reste constante (252, 356).

9. Procédé selon la revendication 1, dans lequel les étapes de détermination, de sauvegarde et de communication sont amorcées automatiquement par le terminal sans intervention de l'utilisateur autre que le déplacement du terminal vers une position différente (124, 204, 220, 224, 236, 248).

10. Système comprenant un terminal mobile (104) et un système de recommandeur (168), ledit terminal mobile étant adapté pour fournir des données d'utilisateur concernant un utilisateur dudit terminal audit système de recommandeur (168) d'un dispositif électronique de client (164), le terminal mobile comprenant:
une mémoire (128);
un transmetteur (120);
un récepteur configuré pour recevoir un signal sans fil (120, 156); et
un processeur (112) pour déterminer, à partir du signal reçu, une position actuelle du terminal (204), sauvegarder dans ladite mémoire (216) un identifiant de la position déterminée et communiquer la position déterminée audit système de recommandeur d'un dispositif électronique de client au moyen dudit transmetteur,
**caractérisé en ce que**:
le processeur est conçu pour déterminer une période de temps pendant laquelle le terminal est resté dans une région, et le système de recommandeur est conçu pour proposer un contenu associé à ladite région si la période de temps est supérieure à une période de temps prédéterminée.

11. Système selon la revendication 10, dans lequel ledit terminal comprend en outre un dispositif d'entrée (136), et est en outre configuré de telle sorte que ladite détermination soit déclenchée par ledit utilisateur qui actionne ledit dispositif d'entrée.

12. Système selon la revendication 10, dans lequel le terminal mobile comprend en outre une minuterie (116), dans lequel ledit signal a été transmis à partir d'un réseau de terminal mobile, le processeur étant en outre configuré pour détecter ledit signal (120, 156), reconnaître, à partir du signal, si ladite position déterminée est située à l'extérieur d'un territoire domestique prédéfini de l'utilisateur (204), et s'il est reconnu que le terminal est situé à l'extérieur du territoire domestique, démarrer automatiquement, et sans intervention de l'utilisateur autre que le déplacement du terminal vers une position différente, une première période de temps prédéterminée (216) qui est mesurée au moyen de ladite minuterie.

13. Système selon la revendication 12, dans lequel la position actuelle que le processeur doit déterminer change en correspondance avec le déplacement du terminal, ladite position actuelle comprenant à n'importe quel moment une région et une région secondaire à l'intérieur de la région (216), le processeur étant configuré pour discerner la région et la région secondaire à partir du signal et pour surveiller ledit signal afin de déterminer si au moins soit la région soit la région secondaire reste constante sur ladite première période de temps prédéterminée (236, 248).

14. Système selon la revendication 13, le processeur étant en outre configuré pour:
surveiller ledit signal afin de déterminer si la région reste constante sur une première période de temps prédéterminée (236); et
surveiller ledit signal afin de déterminer si la région secondaire reste constante sur une deuxième période de temps prédéterminée (248).

15. Système selon la revendication 14, dans lequel le processeur est en outre configuré pour, s'il est déterminé que la région est restée constante sur ladite première période de temps prédéterminée, sauvegarder la région comme un identifiant (240), et communiquer ladite région (124, 156, 160) au système de recommandeur.

16. Système selon la revendication 15, dans lequel le processeur est en outre configuré pour, s'il est déterminé que la région et la région secondaire sont toutes les deux restées constantes sur les première et deuxième périodes de temps prédéterminées, respectivement, sauvegarder la région secondaire comme un identifiant (228), et communiquer ladite région secondaire (124, 156, 160) au système de recommandeur.

17. Système selon la revendication 13, dans lequel le processeur est en outre configuré pour surveiller ledit signal afin de déterminer si la région reste constante sur une première période de temps prédéterminée (236), et, pendant la détermination que la région est restée constante, surveiller la région secondaire pour mesurer la période de temps pendant laquelle la région secondaire reste constante (248), détecter tout changement entre ladite région secondaire et une nouvelle région secondaire et mesurer la période de temps pendant laquelle la nouvelle région secondaire reste constante (252, 356).

18. Système selon la revendication 10, dans lequel le processeur est en outre configuré pour amorcer automatiquement lesdites étapes de détermination, de sauvegarde et de communication sans intervention de l'utilisateur autre que le déplacement du terminal vers une position différente (124, 204, 220, 224, 236, 248).

19. Système selon la revendication 10, dans lequel ledit terminal comprend un téléphone mobile (104).
